# EUROPEAN PATENT SPECIFICATION

(11) **EP 2 357 372 B1**
(45) Date of publication and mention of the grant of the patent: **01.01.2014**
(21) Application number: 11151499.8
(22) Date of filing: 20.01.2011
(51) Int. Cl.: F16C 19/20, F16C 33/37

(54) **bearing with rolling elements with different diameter**
Wälzlager mit Wälzkörper mit unterschiedlichen Durchmessern
roulements à rouleaux avec des rouleaux de différents diamètres

(30) Priority: 09.02.2010 GB 201002013
(43) Date of publication of application: 17.08.2011
(73) Proprietor: Rolls-Royce plc, London SW1E 6AT (GB)
(72) Inventor: Parsley, Andrew, Bristol, BS7 9RB (GB); Gibbons, John Leslie, Gloucester, Gloucestershire GL2 9AN (GB); Taylor, Paul Francis, Bristol, BS34 6AA (GB)
(74) Representative: Roberts, Nicholas John

(56) References cited:
- EP-A1- 1 022 476
- WO-A1-2004/013503
- JP-A- 7 145 820
- JP-A- 2006 200 571
- US-A- 975 616
- US-A- 4 795 279
- US-A1- 2003 138 173

## Description

This invention relates to a bearing, and is particularly, but not exclusively, concerned with a bearing for a rotatable nozzle of a gas turbine engine.

Bearings which have a large track diameter in relation to the diameter of the rolling elements, require a large number of rolling elements. In addition, large bearings, such as slewing bearings used on rotatable nozzles for gas turbine engines, are typically of a deep groove design to ensure that the rolling elements remain in contact with the races of the bearing when subjected to loads at various angles during operation. These characteristics mean that it is often not practical to use a cage arrangement to maintain spacing between the rolling elements. Separation of the rolling elements is therefore maintained using individual separator elements disposed between the rolling elements so that the separator elements are free to move with the rolling elements about the bearing.

For large diameter bearings it is necessary to ensure effective distribution of the load applied to the bearing across the rolling elements to avoid exposing individual elements to excessive loads. The rolling elements are therefore manufactured to extremely tight tolerances. A consequence of manufacturing the rolling elements to tight tolerances is that the performance of the rolling elements in the bearing is extremely consistent. A phenomenon associated with this consistent performance is the tendency for the rolling elements, and associated separator element elements, to group together into a continuous train with only a single gap in the train between the rolling elements and the separator elements.

Large uninterrupted trains of rolling elements and separator elements increase the compressive loads between rolling elements and separator elements and drive friction forces between the rolling elements and the separator elements higher. This, in turn, increases the amount of torque required to rotate the bearing.

In addition, the increased friction between the rolling elements and the separator elements can cause local and instantaneous flash temperatures which, in the case of greased bearings, lead to deterioration of the grease. Gross deterioration of the grease can lead to separation of the base-oil, oxidation of the grease or a change in consistency making the bearing more sensitive to friction. Deterioration of the grease can also reduce the corrosion inhibiting properties of the grease, leaving the bearing exposed to corrosion.

High levels of friction can also give rise to an increase in bearing noise.

WO 2004013503 discloses a bearing arrangement in which roller bearings having different nominal diameters are arranged between first and second bearing races. The difference in diameter between said roller bearings is selected in such a way that a roller bearing that has a smaller nominal diameter assumes a bearing function only when the machine element is in a loaded state.

In this specification, the terms "radial" and "axial" are defined with respect to the radius of the bearing and the rotational axis of the bearing unless otherwise specified.

According to the invention there is provided a bearing comprising a plurality of rolling elements disposed between a first race and a second race, in which at least one of the rolling elements is a control element having characteristics which differ from the remaining rolling elements comprising a non-circular profile, such that rotation of the first race with respect to the second race causes the control element to travel at a precessional speed which is greater than or less than the precessional speed of the remaining rolling elements.

The precessional speed of the rolling element is the speed at which the centre of a rolling element is driven in a circumferential direction around the bearing.

The control element may have a characteristic which causes the control element to rotate faster or slower than the remaining rolling elements when the first race is rotated with respect to the second race.

The control element may have a different rolling radius from the remaining rolling elements.

The control element is of a different shape from the remaining rolling elements. The control element may, for example, have a polygonal profile. Alternatively the control element may have an elliptical profile. Alternatively the control element has an irregular profile.

The control element may be one of a plurality of identical control elements. There may be 1, 2 or more than 2 control elements. The ratio of control elements to remaining elements may be not greater than 1:1 and not less than 1:10. Preferably the ratio of control elements to remaining elements may be not less than 1:100. The number of control elements may therefore equal the number of remaining rolling elements. It will be appreciated, however, that the ratio of control elements to the remaining elements may be determined based on the loading requirements of the bearing and the number of control elements required to maintain separation of the rolling elements.

The remaining rolling elements may be support elements.

The rolling elements may be spherical. The raceways of the first race and the second race may have raceway curvatures which correspond to the curvature of the rolling elements. The raceway curvatures may be curved to correspond to the curvature of the rolling elements such that the distance between the first race and the second race in the region of contact with the control element is reduced. Alternatively the diameter of the support elements may be greater than the diameter of the control elements such that the distance between the first race and the second race in the region of contact with the control element is increased. The contact angle of the control element may be greater than the contact angle of the remaining rolling elements, or the contact angle of the control element may be less than the contact angle of the remaining rolling elements.

The first race may be an inner race and the second race may be an outer race and in one embodiment displacement of the first race towards the second race causes the control element to contact the inner race at a position which is radially outward of the position at which the remaining elements contact the inner race, and for the control element to contact the outer race at a position which is radially inward of the position at which the remaining elements contact the outer race.

In an alternative embodiment, displacement of the first race towards the second race causes the control element to contact the inner race at a position which is radially inward of the position at which the remaining elements contact the inner race, and for the control element to contact the outer race at a position which is radially outward of the position at which the remaining elements contact the outer race.

The stiffness of the control element may be less than the stiffness of the remaining rolling elements. In this context, "stiffness" is taken to mean resistance to deflection of the rolling element normal to the raceway surface.

The stiffness of the control element may be greater than the stiffness of the remaining rolling elements.

The coefficient of thermal expansion of the control element may be different from the coefficient of thermal expansion of the remaining rolling elements. For example, the coefficient of thermal expansion of the control element may be less than that of the remaining rolling elements.

The frictional resistance of the control element to precessional speed may be different to the frictional resistance of the remaining rolling elements to precessional speed.

A rotatable nozzle for a gas turbine engine may be provided with a bearing according to the above.

For a better understanding of the present invention, and to show more clearly how it may be carried into effect, reference will now be made, by way of example, to the accompanying drawings, in which:-
Figure 1 shows a schematic view of a large diameter bearing in accordance with the invention;
Figure 2 shows an enlarged schematic partial view of the bearing shown in Figure 1;
Figure 3 shows an enlarged sectional view along the line A-A of the bearing shown in Figures 1 and 2;
Figure 4 shows a sectional view of the bearing through a support element of the bearing;
Figure 5 shows a sectional view of the bearing through a control element of the bearing;
Figure 6 shows a schematic representation of an embodiment of the invention,
Figure 7 shows a schematic representation of an embodiment of the invention as it deforms in use; and
Figure 8 shows a number of variations to the geometry of the rolling element of the present invention.

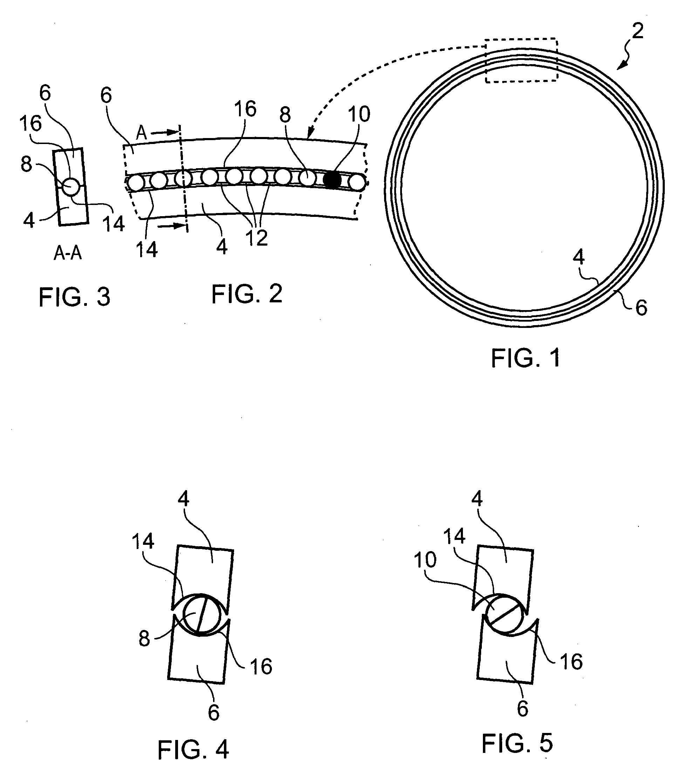

The bearing 2, shown in Figures 1 and 2, comprises a plurality of spherical rolling elements 8, 10 disposed between an inner race 4 and an outer race 6. Separator element elements 12 are provided between adjacent rolling elements 8, 10. The rolling elements 8,10 consist of support elements 8 and control elements 10. Each control element 10 is disposed between two adjacent support elements 8. The control elements 10 are substantially the same size and are smaller than the support elements 8. The races 4, 6 are thus predominantly supported by the larger support elements 8. There are significantly more support elements 8 than control elements 10. The ratio of control elements 10 to support elements 8 may, for example, be 1:7.

As shown in Figure 3, the inner and outer races 4, 6 have respective raceways 14, 16 which are curved to accommodate the rolling elements 8, 10. The curvature of the raceways 14, 16 corresponds to the curvature of the rolling elements 8, 10 and together, the raceways 14, 16 extend almost completely about the rolling elements 8, 10. The curvature of the raceways 14, 16 thus ensures that the rolling elements 8, 10 remain in contact with the raceways 14, 16 over a range of operating conditions.

Figure 4 shows a sectional view of the bearing 2 through the support element 8 in which the bearing is subjected to axial and radial loading. The support element 8 is in contact with both the inner raceway 14 and the outer raceway 16. The point of contact with the inner raceway 14 is diametrically opposite, with respect to the support element 8, the point of contact with the outer raceway 16.

The radial position at which the support element 8 contacts the inner raceway 14 and the outer raceway 16 is dependent on the interference load acting on the support element 8, where the interference load is the amount of load transmitted from the raceways 4,6 to the rolling elements 8,10. The greater the radial element of the interference load, the further outward the contact point of the support element 8 with the outer raceway 16 and the further inward the contact point of the support element 8 with the inner raceway 14. The angle formed by a line intersecting the contact points with the radial direction of the bearing 2 is the contact angle of the support element 8. Thus, the greater the interference load, the smaller the contact angle.

When a radial load is applied to the races 4,6 most of the load is transmitted to the support elements 8. However, in the vicinity of the control elements 10 a greater proportion of the load must be resisted by the races 4,6, and hence the control elements 10 are subjected to a lower interference load. Consequently, the races 4,6 deflect further in the vicinity of the control elements 10 than in the vicinity of the support elements 8. It is this further deflection which leads to the control elements having the higher contact angle.

Figure 5 shows a sectional view of the bearing 2 through the control element 10 in which the bearing is subjected to the same axial and radial loading shown in Figure 4. The interference load which acts on the control element 10 is smaller than that which acts on the support element 8. Consequently, the control element 10 contacts the outer raceway at a point which is radially inward of the corresponding contact point of the support element 8 and contacts the inner raceway 14 at a point which is radially outward of the corresponding contact point of the support element 8. The contact angle of the control element 10 is thus greater than the contact angle of the support element 8.

Rotation of the inner race 4 with respect to the outer race 6 drives the rolling elements 8, 10 about outer raceway 16 of the bearing 2. The speed at which the centre of a rolling element 8, 10 is driven in a circumferential direction around the bearing is the precessional speed of the rolling element 8, 10.

The control element 10, which is driven by the inner raceway 14 at a distance which is radially outward from the point of contact between the support elements 8 and the inner raceway 14, is driven at a higher precessional speed than the support element 8. Furthermore, the control element 10 is driven about the outer raceway 16 at a distance that is radially inward from the support elements 8 and the outer raceway 16. The control element 10 thus travels over a shorter distance about the outer raceway 16 than a corresponding support element 8.

The control element 10 is therefore driven at a higher rotational speed over a shorter distance than a corresponding support element 8 which translates into a higher precessional speed.

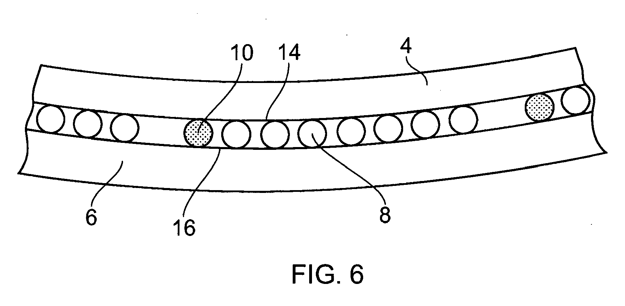

As shown in Figure 6, the control element 10 is thus driven up behind an adjacent support element 8 and creates a gap between the control element 10 and a following support element 8. The rolling elements 8, 10 are thus divided up into trains of support elements 8 disposed between control elements 10.

Alternatively the interference load which acts on the control element 10 may be arranged such that it is greater than that which acts on the support element 8, for example where the control element 10 has a larger rolling diameter than the support elements 8. Consequently, the control element 10 contacts the outer raceway at a point which is radially outward of the corresponding contact point of the support element 8 and contacts the inner raceway 14 at a point which is radially inward of the corresponding contact point of the support element 8. The contact angle of the control element 10 is thus smaller than the contact angle of the support element 8. In such an embodiment the control element 10 is driven at a lower rotational speed over a shorter distance than a corresponding support element 8 which translates into a lower precessional speed. Thus the control element 10 is slowed down in front of an adjacent support element 8 and creates a gap between the control element 10 and a leading support element 8. The rolling elements 8, 10 are thus divided up into trains of support elements 8 disposed between control elements 10.

The control elements 10 may be a different colour from the support elements 8 which enables the control elements 10 to be visibly distinguished from the support elements 8. For example, where the rolling elements 8, 10 are ceramic, different coloured dyes (e.g comprising a trace level of metal salt) could be added to the each type of element 8, 10. The control elements 10 may, however, be made from a material which is visibly different from the material from which the support elements 8 are made. For example, either the support elements 8 or the control elements10 could be made from steel and the other made from ceramic.

In an alternative embodiment, the control element is made the same size as the support element, but has a lower stiffness. Thus, when the bearing is loaded, the control element is compressed to a smaller rolling diameter than the support element. The rolling diameter of the control element is thus reduced when the bearing is placed under a load which is large enough to deform the control element.

In a further embodiment the relative youngs modulus of the control element and raceway is chosen such that the profile of the control element is altered as the load upon the bearing is varied. Thus as load is varied, the contact area between the rolling element and raceway is altered to vary the stiffness of the control element. For example, as the load is increased, contact area between the rolling element and raceway is increased, the stiffness of the control element is increased. As the load is decreased, contact area between the rolling element and raceway is decreased, the stiffness of the control element is reduced.

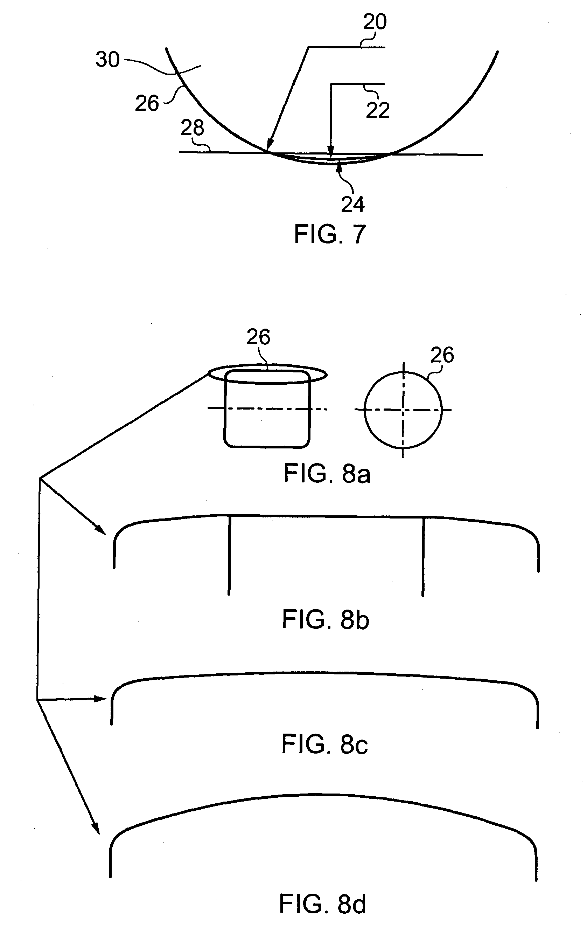

Since the rolling element and raceway are both elastic bodies, the raceway 28 and the rolling element 30 will deflect as shown in Figure 7. The rolling radius will be a function of the non-deformed element radius 20 and a radius 22 from the centre of the element to the deformed surface 24 of the element. The larger the amount of deformation of the element surface 26 into the raceway 28, the larger the reduction in rolling radius. In figure 7 the maximum rolling radius is the radius of the element 20 and the minimum rolling radius is the element radius 20 minus the element deflection (i.e. the deformed radius 22)

In a further embodiment, the control element is provided with a lower thermal expansion. Thus, when the bearing is heated the control element is expanded less than the support element. The control element therefore acts as a control element when the temperature of the bearing is raised to expand the control elements and the support elements. This may be particularly suitable for bearings operating over large temperature ranges such as engine nozzle bearings.

In an alternative embodiment, the frictional resistance of the control element to precessional speed may be different to the frictional resistance of the remaining rolling elements to precessional speed. The effective rolling diameter of the control element is changed (i.e. the control element is elastically deformed) at a contact region between the control element and raceway by the frictional resistance to precessional speed. A control element with a lower frictional resistance than the remaining rolling elements would have a greater precessional speed than the rolling elements. Conversely, a control element with a higher frictional resistance than the remaining rolling elements would have a lower precessional speed than the rolling elements.

Further embodiments are shown in Figures 8b, 8c and 8d, each with a different geometric profile on the element rolling surface, as indicated in Figure 8a. Figure 8b shows a semi-crowned profile, which will minimise the maximum Hertzian stresses at the contact region. It comprises central cylindrical section flanked by two large radii sides to minimise the stress at the edges of the roller. A variation of this is a fully crowned profile shown in Figure 8c and a barrelled profile in Figure 8d, which will produce the same effect. The variation in radius along the length of rolling element (i.e. from left to right in Figures 8b, 8c and 8d) which forms the semi-crowned or crowned profile may be a small percentage of the total diameter. Such geometric profiles will result in a different deflection into the raceway, thus a different rolling radius and a different precession speed.

It will be appreciated that the invention could be applied to bearings comprising other types of rolling elements. These include, but are not limited to, roller bearings, taper bearings and needle bearings.

The invention may be applied to caged bearings to change the distribution of the net load exerted on the cage by the rolling elements. This may allow use of a cage which is lower weight or smaller than would otherwise be required, or reduce cycling loading and enhance the durability of the cage.

It will be appreciated that the present invention may be applied to many applications and is not limited to use in a gas turbine engine.

## Claims

1. A bearing (2) comprising a plurality of rolling elements (8, 10), each of which is load bearing and is disposed between, and contacts a first race (4) and a second race (6) when subject to axial and radial loading, **characterised in that** at least one of the rolling elements is a control element (10) having characteristics which differ from the remaining rolling elements (8) comprising a non-circular profile, such that rotation of the first race (4) with respect to the second race (6) causes the control element (10) to travel at a precessional speed which is greater than or less than the precessional speed of the remaining rolling elements (8).

2. A bearing according to claim 1, in which a characteristic of the control element (10) causes the control element (10) to rotate faster or slower than the remaining rolling elements (8) when the first race (4) is rotated with respect to the second race (6).

3. A bearing according to claim 2, in which the control element (10) has a different rolling radius from the remaining rolling elements (8).

4. A bearing according to claim 3, in which the control element (10) is of a different size from the remaining rolling elements (8).

5. A bearing according to any one of the preceding claims, in which the control element (10) is one of a plurality of identical control elements (10).

6. A bearing according to claim 5, in which the number of control elements (10) equals the number of remaining rolling elements (8).

7. A bearing according to any one of the preceding claims, in which the remaining rolling elements (8) are support elements.

8. A bearing according to any one of the preceding claims, in which the rolling elements (8) are spherical.

9. A bearing according to claim 8, in which the raceways of the first race (4) and the second race (6) have raceway curvatures which correspond to the curvature of the rolling elements(8, 10).

10. A bearing according to claim 9, in which the raceway curvatures correspond to the curvature of rolling elements (8, 10) such that, when the distance between the first race (4) and the second race (6) in the region of contact with the control element (10) is reduced, the contact angle of the control element (10) is greater than the contact angle of the remaining rolling elements (8).

11. A bearing according to any one of the preceding claims, in which the first race (4) is an inner race and the second race (6) is an outer race and displacement of the first race (4) towards the second race (6) causes the control element (10) to contact the inner race (4) at a position which is radially outward of the position at which the remaining elements contact the inner race (4) and for the control element (10) to contact the outer race (6) at a position which is radially inward of the position at which the remaining elements (8) contact the outer race (6).

12. A bearing according to any one of the preceding claims, in which the stiffness of the control element (10) is less than the stiffness of the remaining rolling elements (8).

13. A bearing according to any one of the preceding claims, in which the coefficient of thermal expansion of the control element (10) is different from the coefficient of thermal expansion of the remaining rolling elements (8).

14. A bearing according to any one of the preceding claims, in which the frictional resistance of the control element (10) to precessional speed is different to the frictional resistance of the remaining rolling elements (8) to precessional speed.

## Patentansprüche

1. Lager (2) mit einer Mehrzahl von Wälzelementen (8, 10), die jeweils lasttragend sind und zwischen und in Berührung mit einem ersten Laufring (4) und einem zweiten Laufring (6) angeordnet sind, wenn sie axialer und radialer Belastung ausgesetzt sind, **dadurch gekennzeichnet, dass** mindestens eines der Wälzelemente ein Kontrollelement (10) ist, das Eigenschaften hat, die von den übrigen Wälzelementen (8) abweichen und ein nichtkreisförmiges Profil umfassen, so dass eine Drehung des ersten Laufrings (4) mit Bezug auf den zweiten Laufring (6) bewirkt, dass das Kontrollelement (10) mit einer Präzessionsgeschwindigkeit wandert, die größer oder kleiner als die Präzessionsgeschwindigkeit der übrigen Wälzelemente (8) ist.

2. Lager nach Anspruch 1, wobei eine Eigenschaft des Kontrollelements (10) bewirkt, dass das Kontrollelement (10) sich schneller oder langsamer als die übrigen Wälzelemente (8) dreht, wenn der erste Laufring (4) mit Bezug auf den zweiten Laufring (6) gedreht wird.

3. Lager nach Anspruch 2, wobei das Kontrollelement (10) einen von den übrigen Wälzelementen (8) verschiedenen Rollradius hat.

4. Lager nach Anspruch 3, wobei das Kontrollelement (10) eine von den übrigen Wälzelementen (8) verschiedene Größe hat.

5. Lager nach einem der vorhergehenden Ansprüche, wobei das Kontrollelement (10) eines von einer Mehrzahl identischer Kontrollelemente (10) ist.

6. Lager nach Anspruch 5, wobei die Anzahl von Kontrollelementen (10) gleich der Anzahl der übrigen Wälzelemente (8) ist.

7. Lager nach einem der vorhergehenden Ansprüche, wobei die übrigen Wälzelemente (8) Stützelemente sind.

8. Lager nach einem der vorhergehenden Ansprüche, wobei die Wälzelemente (8) kugelförmig sind.

9. Lager nach Anspruch 8, wobei die Rollbahnen des ersten Laufrings (4) und des zweiten Laufrings (6) Rollbahnkrümmungen haben, die der Krümmung der Wälzelemente (8, 10) entsprechen.

10. Lager nach Anspruch 9, wobei die Rollbahnkrümmungen der Krümmung der Wälzelemente (8, 10) derart entsprechen, dass, wenn die Distanz zwischen dem ersten Laufring (4) und dem zweiten Laufring (6) im Berührungsbereich mit dem Kontrollelement (10) reduziert ist, der Berührungswinkel des Kontrollelements (10) größer als der Berührungswinkel der übrigen Wälzelemente (8) ist.

11. Lager nach einem der vorhergehenden Ansprüche, wobei der erste Laufring (4) ein innerer Laufring und der zweite Laufring (6) ein äußerer Laufring ist, und ein Versatz des ersten Laufrings (4) zum zweiten Laufring (6) hin bewirkt, dass das Kontrollelement (10) den inneren Laufring (4) an einer Position berührt, der radial außerhalb der Position liegt, bei welcher die übrigen Elemente den inneren Laufring (4) berühren, und das Kontrollelement (10) den äußeren Laufring (6) an einer Position berührt, die radial innerhalb der Position liegt, an welcher die übrigen Elemente (8) den äußeren Laufring (6) berühren.

12. Lager nach einem der vorhergehenden Ansprüche, wobei die Steifigkeit des Kontrollelements (10) kleiner als die Steifigkeit der übrigen Wälzelemente (8) ist.

13. Lager nach einem der vorhergehenden Ansprüche, wobei der
Wärmedehnungskoeffizient des Kontrollelements (10) vom Wärmedehnungskoeffizient der übrigen Wälzelemente (8) verschieden ist.

14. Lager nach einem der vorhergehenden Ansprüche, wobei der Reibwiderstand des Kontrollelements (10) gegen die Präzessionsgeschwindigkeit verschieden vom Reibwiderstand der übrigen Wälzelemente (8) für die Präzessionsgeschwindigkeit ist.

## Revendications

1. Roulement (2) comprenant une pluralité d'éléments roulants (8, 10), chacun étant porteur et disposé entre une première bague (4) et une deuxième bague (6), et entre en contact avec, la première bague (4) et la deuxième bague (6) lorsqu'il est soumis à un chargement axial et radial, **caractérisé en ce qu'**au moins un des éléments roulants est un élément de commande (10) présentant des caractéristiques qui diffèrent des autres éléments roulants (8) comprenant un profil non circulaire, de sorte que la rotation de la première bague (4) par rapport à la seconde bague (6) entraîne le déplacement de l'élément de commande (10) à une vitesse de précession qui est supérieure ou inférieure à la vitesse de précession des autres éléments roulants (8).

2. Roulement selon la revendication 1, dans lequel une caractéristique de l'élément de commande (10) entraîne la rotation de l'élément de commande (10) de manière plus rapide ou plus lente que celle des autres éléments roulants (8) lorsque la première bague (4) est tournée par rapport à la seconde bague (6).

3. Roulement selon la revendication 2, dans lequel l'élément de commande (10) présente un rayon de roulement différent de celui des autres éléments roulants (8).

4. Roulement selon la revendication 3, dans lequel l'élément de commande (10) est d'une taille différente de celle des autres éléments roulants (8).

5. Roulement selon une quelconque des revendications précédentes, dans lequel l'élément de commande (10) est un parmi une pluralité d'éléments de commande identiques (10).

6. Roulement selon la revendication 5, dans lequel le nombre d'éléments de commandes (10) est égal au nombre des autres éléments roulants (8).

7. Roulement selon une quelconque des revendications précédentes, dans lequel les autres éléments roulants (8) sont des éléments de support.

8. Roulement selon une quelconque des revendications précédentes, dans lequel les éléments roulants (8) sont sphériques.

9. Roulement selon la revendication 8, dans lequel les chemins de roulement de la première bague (4) et de la seconde bague (6) présentent des courbures de chemins de roulement qui correspondent à la courbure des éléments roulants (8, 10).

10. Roulement selon la revendication 9, dans lequel les courbures de chemins de roulement correspondent à la courbure des éléments roulants (8, 10) de sorte que, lorsque la distance entre la première bague (4) et la seconde bague (6) dans la région de contact avec l'élément de commande (10) est réduite, l'angle de contact de l'élément de commande (10) est supérieur à l'angle de contact des autres éléments roulants (8).

11. Roulement selon une quelconque des revendications précédentes, dans lequel la première bague (4) est une bague intérieure et la seconde bague (6) est une bague extérieure et le déplacement de la première bague (4) vers la seconde bague (6) entraîne le contact de l'élément de commande (10) avec la bague intérieure (4) dans une position qui est radialement vers l'extérieur de la position à laquelle les autres éléments entrent en contact avec la bague intérieure (4) et le contact de l'élément de commande (10) avec la bague extérieure (6) dans une position qui est radialement vers l'intérieur de la position à laquelle les autres éléments (8) entrent en contact avec la bague extérieure (6).

12. Roulement selon une quelconque des revendications précédentes, dans lequel la raideur de l'élément de commande (10) est inférieure à la raideur des autres éléments roulants (8).

13. Roulement selon une quelconque des revendications précédentes, dans lequel le coefficient de dilatation thermique de l'élément de commande (10) est différent du coefficient de dilatation thermique des autres éléments roulants (8).

14. Roulement selon une quelconque des revendications précédentes, dans lequel la résistance de frottement de l'élément de commande (10) à la vitesse de précession est différente de la résistance de frottement des autres éléments roulants (8) à la vitesse de précession.
